# EUROPEAN PATENT APPLICATION

(11) **EP 2 669 886 A1**
(43) Date of publication of application: **04.12.2013**
(21) Application number: 13168879.8
(22) Date of filing: 23.05.2013
(51) Int. Cl.: G09G 5/00, H04N 7/26, G09G 3/36, G09G 3/20

(54) **Image processing method and image display system utilizing the same**

(30) Priority: 31.05.2012 TW 101119483
(71) Applicant: InnoLux Corporation, Chu-Nan, Miao-Li 350 (TW)
(72) Inventor: Tsai, Yung-Yu, 350 Miao-Li County (TW); Cheng, Chien-Chou, 350 Chu-Nan 350, Miao-Li County (TW)
(74) Representative: 2K Patentanwälte Blasberg Kewitz & Reichel

(57) **Abstract**

An image display system includes a data driving circuit, a gate driving circuit and a controller chip. The data driving circuit outputs a plurality of data driving signals to provide a display image signal to a plurality of pixels on a pixel array. The gate driving circuit outputs a plurality of gate driving signals to drive the pixels on the pixel array. The controller chip receives an input image signal which includes a plurality of sub-frame data, recombines the plurality of sub-frame data so that more than one of the plurality of sub-frame data of the input image signal are merged as one single frame data, and generates and outputs the display image signal.

## Description

### CROSS REFERENCE TO RELATED APPLICATIONS

This Application claims priority of Taiwan Patent Application No. 101119483, filed on May 31, 2012, the entirety of which is incorporated by reference herein.

### BACKGROUND OF THE INVENTION

### Field of the Invention

The invention relates to an image processing method and an image display system, and more particularly to an image processing method and an image display system capable of supporting QFHD image/video data display.

### Description of the Related Art

The Quad Full HD (QFHD) has been developed, which is four times the image/video resolution of the Full HD (FHD), to further extend development of the super high resolution from the conventional image/video resolution. A resolution of FHD is 1920*1080 and a resolution of QFHD is 3840*2160 (therefore, QFHD is also called 4K2K).

Although the image/video resolution has greatly increased, the image processing capacity of currently existing image processing devices has not caught up. For example, the CD/DVD player, which is commonly equipped in home display systems can at most support the FHD image/video display and cannot support the QFHD image/video display. However, the display devices such as a TV, liquid crystal display (LCD) display, or the likes, are now capable of supporting the QFHD image/video data display.

In order to display the QFHD image/video data via currently existing image processing devices, a novel image processing method and image display system capable of supporting the QFHD image/video data display without the need for upgrading currently existing hardware devices, such as CD/DVD players, are highly required.

### BRIEF SUMMARY OF THE INVENTION

Image display system and image processing method are provided. An exemplary embodiment of an image display system comprises a data driving circuit, a gate driving circuit and a controller chip. The data driving circuit outputs a plurality of data driving signals to provide a display image signal to a plurality of pixels on a pixel array. The gate driving circuit outputs a plurality of gate driving signals to drive the pixels on the pixel array. The controller chip receives an input image signal which comprising a plurality of sub-frame data, recombining the sub-frame data so that more than one sub-frame data of the input image signal are merged to become one frame data to generate the display image signal, and outputting the display image signal.

An exemplary embodiment of an image processing method comprises: receiving an original image signal by a signal processing device; processing the original image signal so that one frame data of the original image signal is divided into a plurality of sub-frame data and generating an output image signal comprising the sub-frame data by the signal processing device; receiving the output image signal, and processing the output image signal so that multiple sub-frame data of the output image signal are merged to become one frame data and thereby generating a display image signal by an image display system; and displaying the display image signal by the image display system.

A detailed description is given in the following embodiments with reference to the accompanying drawings.

### BRIEF DESCRIPTION OF DRAWINGS

The invention can be more fully understood by reading the subsequent detailed description and examples with references made to the accompanying drawings, wherein:

FIG. 1 shows one of the various types of image display systems of the invention according to an embodiment of the invention;

FIG. 2 shows a block diagram of an image processing system according to an embodiment of the invention;

FIG. 3 is a flow chart of an image processing method according to an embodiment of the invention;

FIG. 4a is a diagram showing a concept of processing the original image signal according to a first embodiment of the invention;

FIG. 4b is a diagram showing a concept of processing the original image signal according to a second embodiment of the invention;

FIG. 4c is a diagram showing a concept of processing the original image signal according to a third embodiment of the invention;

FIG. 4d is a diagram showing a concept of processing the original image signal according to a fourth embodiment of the invention;

FIG. 5 shows a block diagram of the controller chip according to an embodiment of the invention; and

FIG. 6 shows a block diagram of an image processing device according to an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

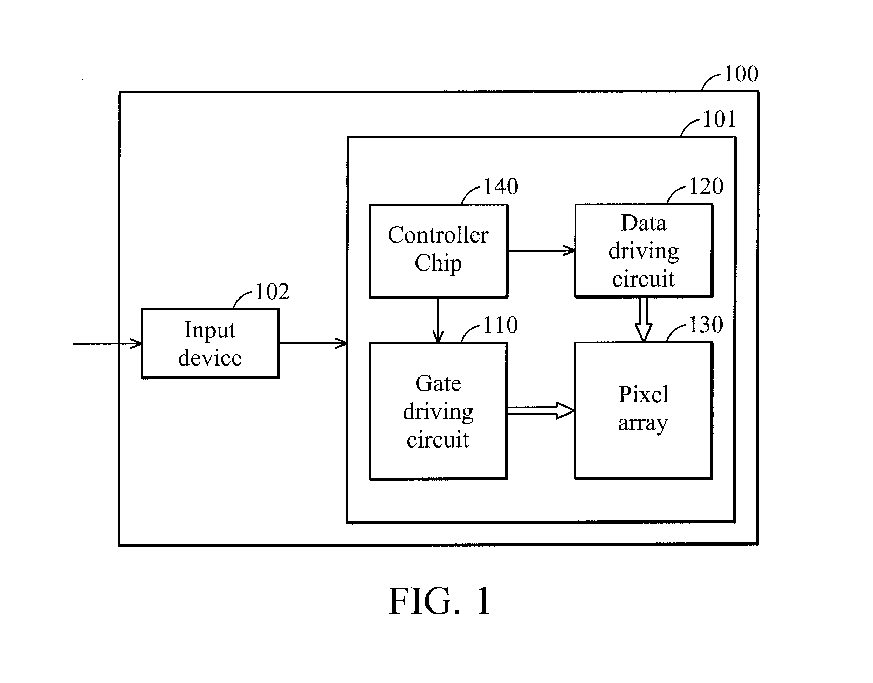

FIG. 1 shows one of the various types of image display systems of the invention according to an embodiment of the invention. As shown in FIG. 1, the image display system may comprise a display panel 101, where the display panel 101 may comprise a gate driving circuit 110, a data driving circuit 120, a pixel array 130 and a controller chip 140. The gate driving circuit 110 outputs a plurality of gate driving signals to drive a plurality of pixels in the pixel array 130. The data driving circuit 120 outputs a plurality of data driving signals to provide data of a display image signal (which will be further illustrated in the following paragraphs) to the pixels of the pixel array 130. The controller chip 140 receives image signals from a host or a signal processing device, processes the image signals to generate the display image signal, and generates the gate driving signals, data driving signals and a plurality of timing signals according to the display image signal so as to control operations of the display panel 101.

In addition, the image display system of the invention may further be comprised in an electronic device 100. The electronic device 100 may comprise the above-mentioned display panel 101 and an input device 102. The input device 102 receives image signals and controls the display panel 101 to display images. According to an embodiment of the invention, the electronic device 100 may be implemented as various devices, comprising: a mobile phone, a digital camera, a personal digital assistant (PDA), a lap-top computer, a personal computer, a television, an in-vehicle display, a portable DVD player, or any apparatus with image display functionality.

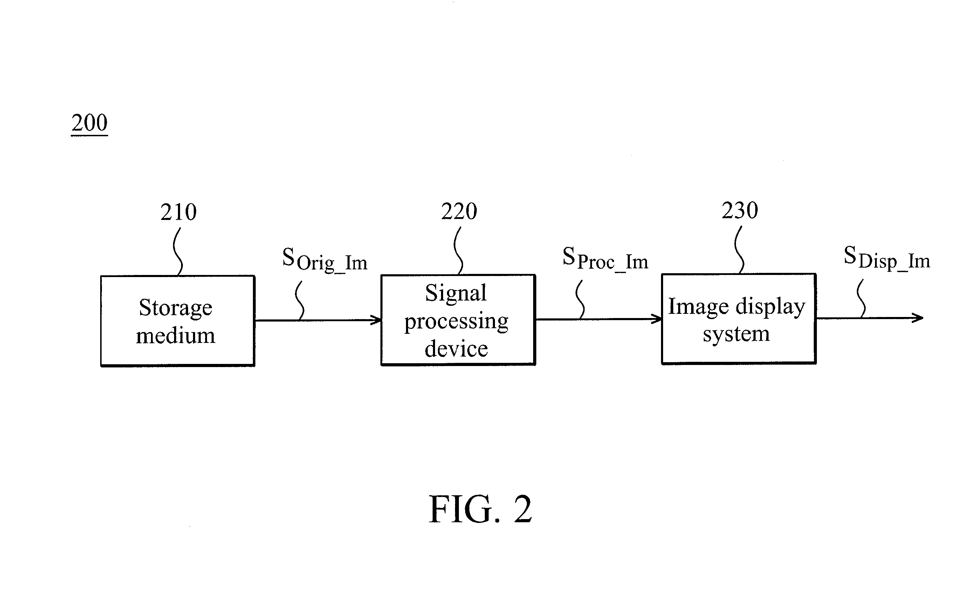

FIG. 2 shows a block diagram of an image processing system according to an embodiment of the invention. The image processing system 200 may comprise a storage medium 210, a signal processing device 220 and an image display system 230. The signal processing device 220 may read or receive an original image signal S_{Orig_Im} from the storage medium 210. In a preferred embodiment of the invention, the original image signal S_{Orig_Im} may be a Quad Full HD (QFHD) image signal. The signal processing device 220 may process the original image signal S_{Orig_Im} to generate an output image signal S_{Proc_Im}. In a preferred embodiment of the invention, the output image signal S_{Proc_Im} may be a Full HD (FHD) image signal. The image display system 230 may receive the output image signal S_{Proc_Im} (which may also be regarded as an input image signal from the aspect of the image display system 230) from the signal processing device 220, and may further process the output image signal S_{Proc_Im} to generate a display image signal S_{Disp_Im} and further display the display image signal S_{Disp_Im}. In a preferred embodiment of the invention, the display image signal S_{Disp_Im} may be a Quad Full HD (QFHD) image signal. The display image signal S_{Disp_Im} may be has four times the horizontal and vertical resolution of the FHD (8K FHD) image signal. In additional the horizontal resolution means a horizontal direction and vertical resolution means a vertical direction.

According to an embodiment of the invention, the storage medium 210 may be any type of storage medium, such as a hard-disc device, a CD/DVD/BR DVD device, or an internal storage medium equipped in any kinds of electronic devices, or others. The signal processing device 220 may be a specific signal processing hardware device, such as a specific signal processing integrated circuit or a software module or a hardware device built in an electronic device. The electronic device may be a computer, a disk player (such as a CD/DVD/BR DVD player), a host, or others.

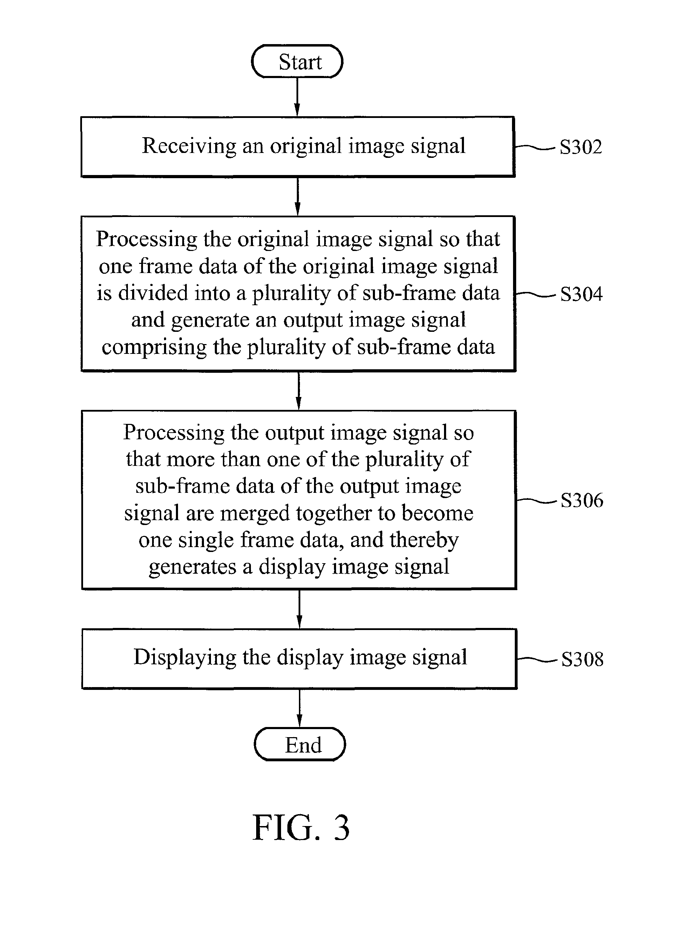

FIG. 3 is a flow chart of an image processing method according to an embodiment of the invention. To begin, the signal processing device receives an original image signal (Step S302). According to an embodiment of the invention, the original image signal may comprise a plurality of frame data. Next, the signal processing device may process the original image signal so that one frame data of the original image signal is divided into a plurality of sub-frame data and generate an output image signal comprising the plurality of sub-frame data (Step S304). Next, the image display system receives the output image signal, processes the output image signal so that more than one of the plurality of sub-frame data of the output image signal are merged together to become one single frame data, and thereby generates a display image signal comprising the frame data (Step S306). Finally, the image display system displays the display image signal (Step S308). The processed image processing methods are further discussed in the following paragraphs.

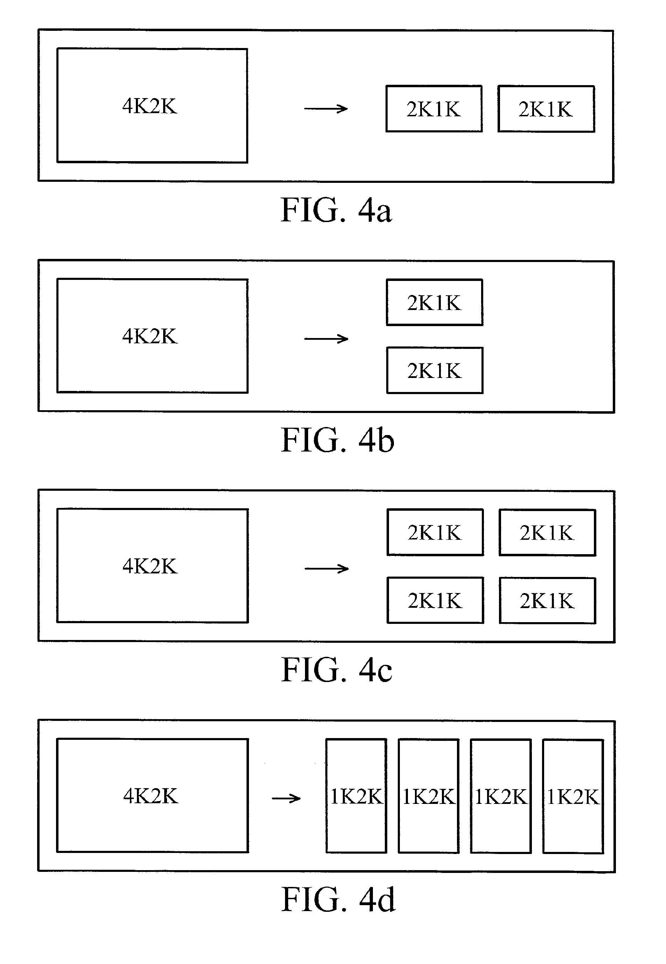

According to an embodiment of the invention, in step S304, the signal processing device 220 may first compress the frame data of the original image signal and then divide one frame data into a plurality sub-frame data, or may directly divide one frame data into a plurality of sub-frame data without compression. FIG. 4a is a diagram showing a concept of processing the original image signal according to a first embodiment of the invention. In the first embodiment, the signal processing device 220 may first compress one frame data of the original image signal along the vertical direction and then divide the compressed frame data along the horizontal direction into a left portion and a right portion, so as to generate two sub-frame data. For example, since the frame data of the original image signal S_{Orig_Im} are Quad Full HD (QFHD) image data with 3840*2160 (4K2K as shown) resolution, after being compressed along the vertical direction, the amount of data can be halved so as to generate an image data with 3840*1080 resolution. Next, the signal processing device 220 may divide the compressed frame data into a left portion and a right portion, so as to generate two sub-frame data with about 1920*1080 (2K1K as shown) resolution. In other words, the output image signal S_{Proc_Im} is converted into FHD image data.

FIG. 4b is a diagram showing a concept of processing the original image signal according to a second embodiment of the invention. In the second embodiment, the signal processing device 220 may first compress the frame data of the original image signal along the horizontal direction, and then divide the compressed frame data along the vertical direction into a upper portion and a lower portion, so as to generate two sub-frame data. For example, since the frame data of the original image signal S_{Orig_Im} are QFHD image data with 3840*2160 (4K2K as shown) resolution, after being compressed along the horizontal direction, the amount of data can be halved so as to generate the image data with 1920*2160 resolution. The frame data of the original image data S_{Orig_Im} also can be 8K FHD image data with 7680*4320 (8K4K not shown) resolution. Next, the signal processing device 220 may divide the compressed frame data into a upper portion and a lower portion, so as to generate two sub-frame data with about 1920*1080 (2K1K as shown) resolution. In other words, the output image signal S_{Proc_Im} is converted into FHD image data.

According to the embodiment of the invention, the signal processing device 220 may compress the image data based on several different algorithms, including a liner algorithm, a bilinear interpolation algorithm, a bicubic interpolation algorithm, a B-Spline algorithm, or other algorithms that are capable of adjusting the image resolution, so as to adjust the image resolutions.

In addition, as previously described, the signal processing device 220 may also directly divide one frame data into a plurality of sub-frame data without compression. FIG. 4c is a diagram showing a concept of processing the original image signal according to a third embodiment of the invention. In the third embodiment of the invention, the signal processing device 220 may divide one frame into four sub-frame data along the vertical and horizontal directions, so as to generate four sub-frame data with about 1920*1080 (2K1K as shown) resolution. In other words, the output image signal S_{Proc_Im} is converted into FHD image data. FIG. 4d is a diagram showing a concept of processing the original image signal according to a fourth embodiment of the invention. In the fourth embodiment of the invention, the signal processing device 220 may divide one frame data into four sub-frame data along the horizontal directions, so as to generate four sub-frame data with about 1080*1920 (1K2K as shown) resolution. In other words, the output image signal S_{Proc_Im} is converted into FHD image data.

In the embodiment of the invention, the frame rate of each image signal may also be changed in response to the above-mentioned image processing procedures. For example, in FIG. 4a and FIG. 4b, the original image signal S_{Orig_Im} may be the QFHD image data with a 60Hz frame rate, and after processing, the output image signal S_{Proc_Im} may be the FHD image data with a 120Hz frame rate. Because in the first and second embodiments of the invention, one frame data of the original image signal S_{Orig_Im} is divided into two sub-frame data, the frame data transmission rate of the output image signal S_{Proc_Im} with 120Hz frame rate may be actually equivalent to the frame data transmission rate of the original image signal S_{Orig_Im} with a 60Hz frame rate.

For another example, in FIG. 4c and FIG. 4d, the original image signal S_{Orig_Im} may be the QFHD image data with a 30Hz frame rate, and after processing, the output image signal S_{Proc_Im} may be the FHD image data with a 120Hz frame rate. Because in the third and fourth embodiments of the invention, one frame data of the original image signal S_{Orig_Im} is divided into four sub-frame data, the frame data transmission rate of the output image signal S_{Proc_Im} with the 120Hz frame rate may be actually equivalent to the frame data transmission rate of the original image signal S_{Orig_Im} with the 30Hz frame rate.

In other words, because one frame data of the original image signal is divided into a plurality of sub-frame data, the frame rate of the output image signal is increased to keep the frame data transmission rate the same. Note that the above-mentioned image processing method is not limited in the field of video signal processing. In some other embodiments of the invention, the original image signal S_{Orig_Im} may also be static image data.

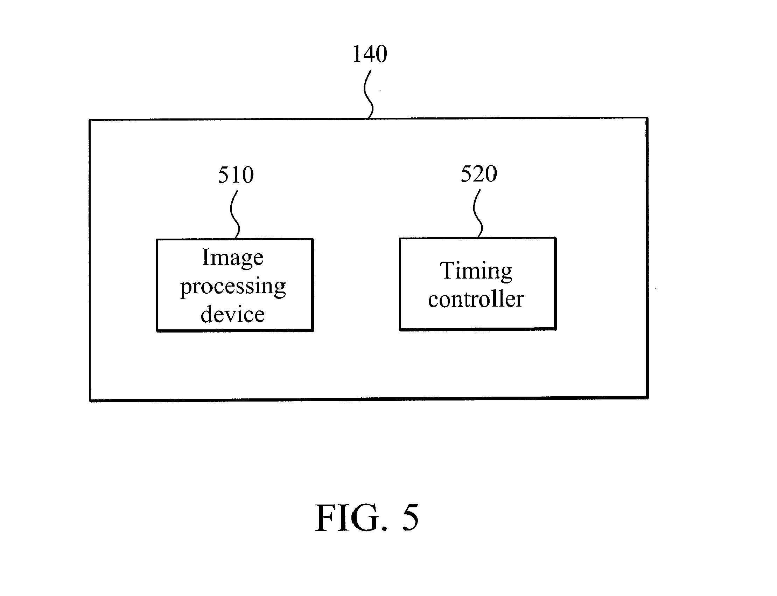

After being processed by the signal processing device 220, the output image signal S_{Proc_Im} may be received by the image display system 230 and further processed by the image display system 230 to generate the above-mentioned display image signal S_{Disp_Im}. FIG. 5 shows a block diagram of the controller chip according to an embodiment of the invention. According to an embodiment of the invention, the controller chip 140 comprised in the image display system 230 may comprise an image processing device 510 for processing the received output image signal S_{Proc_Im} and a timing controller 520 for generating the gate driving signals, the data driving signals and the timing signals according to the display image signal S_{Disp_Im}. According to an embodiment of the invention, the image processing device 510 and the timing controller 520 may be software modules or hardware devices, or any combinations thereof, and the invention should not be limited thereto. In addition, in some other embodiments of the invention, the controller chip may further comprise other hardware devices or software modules, such as a Look-Up Table (LUT) device, or others. Therefore, the invention should not be limited to what is shown in FIG. 5.

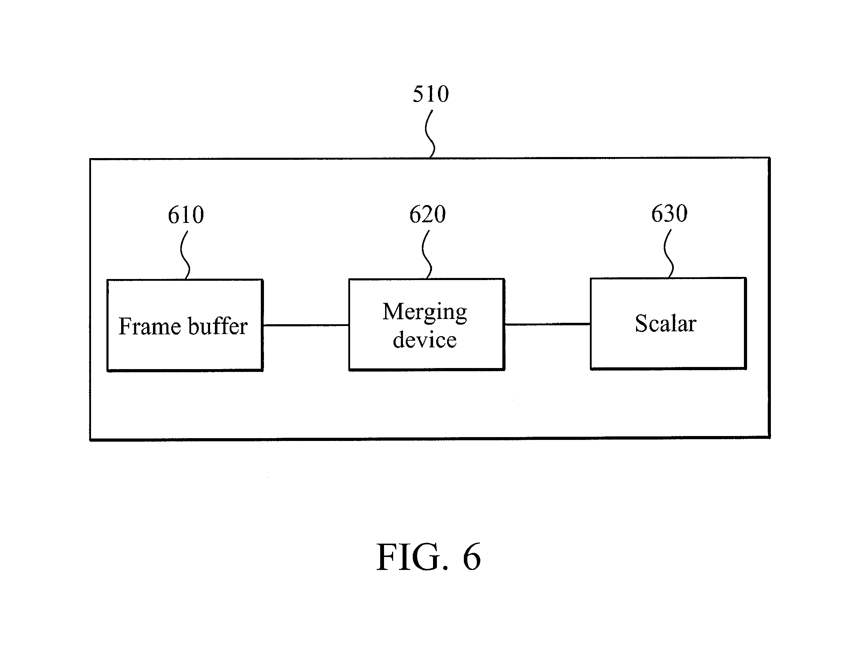

FIG. 6 shows a block diagram of an image processing device according to an embodiment of the invention. According to an embodiment of the invention, the image processing device 510 may at least comprise a frame buffer 610, a merging device 620 and a scalar 630. The frame buffer 610 may buffer the output image signal S_{Proc_Im}. The merging device 620 may merge more than one of the plurality of sub-frame data of the output image signal S_{Proc_Im} to become one single frame data. The scalar 630 may further de-compress the merged frame data (when the signal processing device 220 has performed the compression procedure) to recover the frame data in the original image signal.

According to an embodiment of the invention, in step S306, the merging device 620 may merge more than one of the plurality of sub-frame data of the output image signal S_{Proc_Im} to become one single frame in a way relative to the method adopted by the signal processing device 220 to divide one frame data of the original image signal into a plurality of sub-frame data. For example, when the signal processing device 220 divides one frame data into two sub-frame data along the vertical or horizontal direction as shown in FIG. 4a or FIG. 4b, the merging device 620 may merge the two sub-frame data along the vertical or horizontal direction to become one single frame data. For another example, when the signal processing device 220 divides one frame data into four sub-frame data along the vertical and horizontal direction as shown in FIG. 4c, the merging device 620 may merge the four sub-frame data along the vertical and horizontal direction to become one single frame data. For yet another example, when the signal processing device 220 divides one frame data into four sub-frame data along the horizontal direction as shown in FIG. 4d, the merging device 620 may merge the four sub-frame data along the horizontal direction to become one single frame.

According to an embodiment of the invention, the scalar 630 may de-compress the merged frame data in a way relative to the method adopted by the signal processing device 220 to compress the frame data of the original image signal, so as to recover the frame data in the original image signal. For example, when the signal processing device 220 compresses the frame data of the original image signal along the vertical direction, the scalar 630 may de-compress the frame data along the vertical direction. When the signal processing device 220 compresses the frame data of the original image signal along the horizontal direction, the scalar 630 may de-compress the frame data along the horizontal direction. In addition, according to the embodiment of the invention, the scalar 630 may de-compress the image data based on several different algorithms, including a liner algorithm, a bilinear interpolation algorithm, a bicubic interpolation algorithm, a B-Spline algorithm, or other algorithms which are capable of adjusting the image resolution.

According to an embodiment of the invention, because more than one of the plurality of sub-frame data of the output image signal are merged together to become one single frame data by the image processing device 510, the frame rate of the display image signal outputted by the image processing device 510 is adjusted accordingly, so as to keep the frame data transmission rate the same. For example, when the output image signal S_{Proc_Im} is the FHD image data with a 120Hz frame rate, after being processed by the image processing device 510, the display image signal S_{Disp_Im} may become the QFHD image data with a 60Hz frame rate, which is the same as the original image signal S_{Orig_Im}.

Note that in order to avoid distortion, which may be caused by dividing the frame data, occurring when recovering the frame data by the image display system 230, the signal processing device 220 may reserve some extra boundary pixel data for the divided sub-frame data. For example, a resolution of the divided sub-frame data may be actually greater than 1920*1080, such as 1940*1084. Therefore, when dividing one frame data of the original image signal into a plurality of sub-frame data, image data of the plurality of sub-frame data may be partially overlapped. The signal processing device 220 may transmit the image data having 1940*1084 resolution to the image display system 230. The image display system 230 may further recombine the image data based on proper algorithms, so as to make the junctions of sub-frame data smooth and complete.

Via the image processing method as illustrated above, the QFHD original image signal with a 30Hz or 60Hz frame rate may first be converted into an FHD output image signal with a 120Hz frame rate by the signal processing device 220, where the FHD image signal with the 120Hz frame rate is the highest standard supported by the current CD/DVD players or computer devices that are commonly equipped in home display systems. Next, the output image signal outputted by the CD/DVD players or computer devices may further be converted to become a QFHD image signal with a 30Hz or 60Hz frame rate by the image display system 230. Therefore, there is no need to upgrade the hardware devices, such as the CD/DVD players or computer devices. Only some software modules or hardware logic circuits are needed to be added in the image display system 230 to implement the above mentioned image processing method. Thus, a QFHD image signal with super high resolution can be played and displayed by the currently existing hardware devices. The cost required for upgrading the hardware devices can be greatly saved.

The above-described embodiments of the present invention can be implemented in any of numerous ways. For example, the embodiments may be implemented using hardware, software or a combination thereof. It should be appreciated that any component or collection of components that perform the functions described above can be generically considered as one or more processors that control the above discussed function. The one or more processors can be implemented in numerous ways, such as with dedicated hardware, or with general purpose hardware that is programmed using microcode or software to perform the functions recited above.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. An image display system, comprising:
a data driving circuit, outputting a plurality of data driving signals to provide a display image signal to a plurality of pixels on a pixel array;
a gate driving circuit, outputting a plurality of gate driving signals to drive the pixels on the pixel array; and
a controller chip, receiving an input image signal comprising a plurality of sub-frame data, recombining the plurality of sub-frame data so that more than one sub-frame data of the input image signal are merged together to become one single frame data to generate the display image signal, and outputting the display image signal to the data driving circuit.

2. The image display system as claimed in claim 1, wherein a frame rate of the input image signal is higher than a frame rate of the display image signal.

3. The image display system as claimed in claim 1 or 2, wherein the plurality of sub-frame data of the input image signal are Full HD (FHD) image data.

4. The image display system as claimed in any of the preceding claims, wherein the frame data of the display image signal are Quad Full HD (QFHD) image data.

5. The image display system as claimed in any of the preceding claims, wherein the controller chip merges at least two sub-frame data into one single frame data along at least one of a vertical direction or a horizontal direction.

6. The image display system as claimed in 5, wherein the controller chip merges two sub-frame data into one single frame data along at least one of a vertical direction or a horizontal direction.

7. The image display system as claimed in claim 5, wherein the controller chip merges four sub-frame data into one single frame data along at least one of a vertical direction or a horizontal direction.

8. The image display system as claimed in any of the preceding claims, wherein the controller chip further de-compresses the frame data along at least one of a vertical or a horizontal direction.

9. An image processing method, comprising:
receiving an original image signal by a signal processing device;
processing the original image signal so that one frame data of the original image signal is divided into a plurality of sub-frame data and generating an output image signal comprising the plurality of sub-frame data by the signal processing device;
receiving the output image signal, and processing the output image signal so that more than one of the plurality of sub-frame data of the output image signal are merged together to become one single frame data to thereby generate a display image signal by an image display system; and
displaying the display image signal by the image display system.

10. The image processing method as claimed in claim 9, wherein data of the plurality of sub-frame data are partially overlapped when dividing one frame data of the original image signal into the plurality of sub-frame data.

11. The image processing method as claimed in claim 9 or 10, wherein the original image signal has a first frame rate, the output image signal has a second frame rate and the second frame rate is higher than the first frame rate.

12. The image processing method as claimed in claim 11, wherein the display image signal has a third frame rate, the third frame rate is lower than the second frame rate and is equal to the first frame rate.

13. The image processing method as claimed in any of claims 9 to 12, wherein the frame data of the original image signal are Quad Full HD (QFHD) image data and/or
wherein the frame data of the display image signal are Quad Full HD (QFHD) image data; or
wherein the plurality of sub-frame data of the output image signal are Full HD (FHD) image data.

14. The image processing method as claimed in any of claims 9 to 13, further comprising:
compressing the frame data along at least one of a vertical direction or a horizontal direction by the signal processing device; and/or
de-compressing the frame data along at least one of a vertical or a horizontal direction by the image display system.

15. The image processing method as claimed in any of claims 9 to 14, wherein the step of processing the original image signal so that one frame data of the original image signal is divided into a plurality of sub-frame data further comprises:
dividing one frame data into two sub-frame data along at least one of a vertical direction or a horizontal direction; or
dividing one frame data into at least two sub-frame data along at least one of a vertical direction or a horizontal direction; or
dividing one frame data into four sub-frame data along a horizontal direction.
